# EUROPÄISCHE PATENTANMELDUNG

(11) **EP 1 059 644 A1**
(43) Veröffentlichungstag der Anmeldung: **13.12.2000**
(21) Anmeldenummer: 99111293.9
(22) Anmeldetag: 10.06.1999
(51) Int. Cl.: H01B 3/30

(54) **2-Komponenten Vergussmasse**

(71) Anmelder: CELLPACK AG, CH-5610 Wohlen (CH)
(72) Erfinder: Burger, Roland, 5603 Staufen (CH); Frick, Kurt, 5622 Waltenschwil (CH)
(74) Vertreter: Blum, Rudolf Emil Ernst

(57) **Zusammenfassung**

Die vorliegende Erfindung betrifft eine 2-Komponenten Vergussmasse, insbesondere für elektrische Kabel, aus einem Aminopolyol enthaltenden Giessharz und einem Polyisocyanat enthaltenden Aushärter, welche erst kurz vor Anwendung gemischt werden. Ausserdem hat die vorliegende Erfindung die Verwendung der erfindungsgemässen Vergussmasse zur Herstellung von wasser- und dampfdichten, durchschlagfesten Schichten in Hohlräumen, die Verwendung von Aminopolyolen für die Herstellung von Vergussmassen sowie ein Verfahren zur Bereitstellung einer Vergussmasse für elektrische Kabel zum Gegenstand.

## Beschreibung

Die vorliegende Erfindung betrifft eine 2-Komponenten Vergussmasse, insbesondere für elektrische Kabel, welche aus einer Harzkomponente (Giessharz) und einer Härterkomponente erhalten wird und wobei diese beiden getrennt gehaltenen Komponenten erst kurz vor Gebrauch zur Herstellung eines Formstücks gemischt werden und vergleichsweise rasch sowie ohne grosse Wärmeentwicklung aushärten. Ausserdem hat die vorliegende Erfindung die Verwendung von Aminopolyolen für die Herstellung von Vergussmassen, die Verwendung der erfindungsgemässen Vergussmasse zur Herstellung von wasser- und dampfdichten, elektrisch durchschlagfesten Schichten in Hohlräumen, sowie ein Verfahren zur Bereitstellung einer Vergussmasse für elektrische Kabel zum Gegenstand.

### Hintergrund der Erfindung

Elektrische Bauelemente werden in steigendem Umfang zur Verbesserung ihrer Gebrauchseigenschaften mit Flüssigkunststoffen (Kaltvergussmassen; Giessharze) vergossen. Durch Einbettung beispielsweise von Transformatoren, Sensoren oder elektrischen Kabeln in Vergussmassen wird eine verbesserte Isolation, mechanische Fixierung, Korrosionsbeständigkeit bzw. Wärmeableitung erreicht, sowie ein höherer Schutz vor Beschädigungen aufgrund von Vibrationen, von Schlag-, Stoss- Biege- oder Zugkräften, oder von unbefugten Manipulationen.

Die üblicherweise eingesetzten Vergussmassen sind auf der einen Seite 2-Komponenten-Polyurethansysteme (PUR), d.h. Polymere erhältlich aus Polyolen und Isocyanaten und auf der anderen Seite Epoxidharze, welche den Vorteil haben wesentlich schneller auszuhärten, wenn auch bei hoher Wärmeentwicklung.

In EP-0 587 003 wird ein Verfahren zum Vergiessen von Vergussmuffen für elektrische Kabel mit einer 2-Komponenten-Polyurethan-Vergussmasse beschrieben.

Obwohl die herkömmlich eingesetzten Polyurethan-Vergussmassen in bezug auf ihre Isolations- sowie ihre mechanischen Eigenschaften durchaus erfolgreich sind, sind sie in bezug auf ihre schnelle Aushärtung völlig unbefriedigend. Die Epoxid-Vergussmassen dagegen härten zwar wesentlich schneller aus, aber sie weisen den entscheidenden Nachteil der hohen Exothermie, d.h. der hohen Wärmeentwicklung beim Aushärten auf. Die besagte hohe Wärmeentwicklung ist insofern äusserst kritisch, als sie insbesondere zu Schädigungen an den eigentlich zu schützenden elektrischen Komponenten, z.B. an einem zu vergiessenden elektrischen Kabel, führt.

Eine Aufgabe der vorliegenden Erfindung besteht folglich darin eine Vergussmasse bereitzustellen, welche die oben genannten Nachteile zumindest teilweise vermeidet. Eine weitere Aufgabe der vorliegenden Erfindung ist es ein neuartiges Verfahren zur Herstellung einer Vergussmasse für elektrische Kabel bereitzustellen.

Es ist insbesondere eine Aufgabe der vorliegenden Erfindung eine 2-Komponenten-Vergussmasse bereitzustellen, welche auf der einen Seite schnell aushärtet, dabei aber auf der anderen Seite nur wenig Wärme entwickelt bzw. freisetzt und darüber hinaus lagerstabil ist.

Diese Ziele werden erfindungsgemäss gemäss den unabhängigen Ansprüchen erreicht. Die bevorzugten Ausführungsformen sind in den abhängigen Ansprüchen aufgeführt.

### Kurze Beschreibung der Zeichnungen

Weitere Vorteile der Erfindung ergeben sich aus der nun folgenden Beschreibung anhand der Figuren. Dabei zeigen :

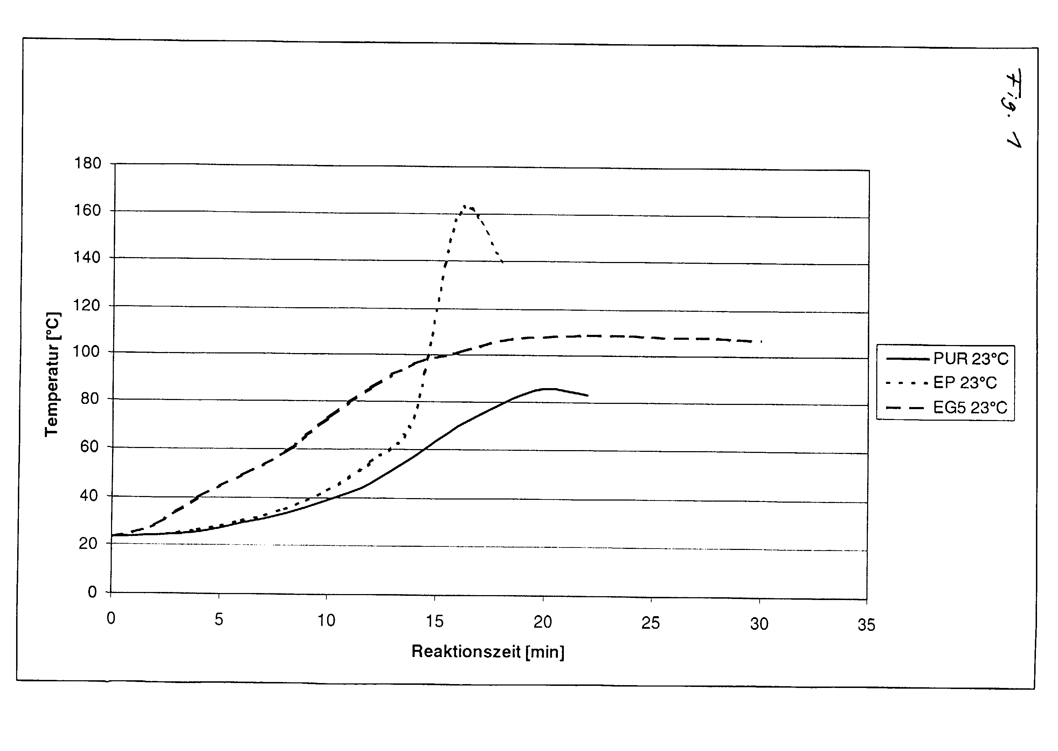

Figur 1 zeigt eine graphische Darstellung der Aushärtungstemperatur als Funktion der Reaktionszeit von 3 verschiedenen Vergussmassen-Systemen. Dabei ist das PUR-System (durchgezogene Kurve) eine herkömmliche 2-Komponenten-Polyurethan-Vergussmasse, das EP-System (gepunktete Kurve) ist eine herkömmliche Epoxidvergussmasse und das System EG 5 (gestrichelte) ist eine bevorzugte Ausführungsform der erfindungsgemässen 2-Komponenten-Vergussmasse auf der Grundlage eines reaktiven Polyols und eines Polyisocyanat-Härters.

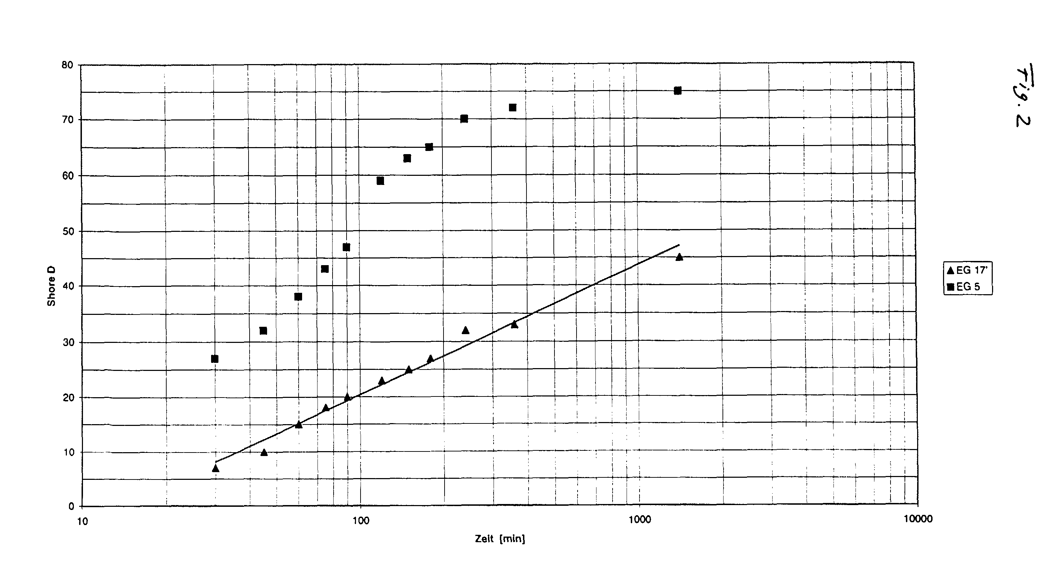

Figur 2 zeigt den Verlauf der Shore D Härte von zwei bevorzugten Ausführungsformen der erfindungsgemässen 2-Komponenten-Vergussmasse (EG 17 und EG 5) als Funktion der Zeit.

### Beschreibung der Erfindung

Völlig überraschend ist jetzt gefunden worden, dass bei der Verwendung eines reaktiven Polyols, d.h. eines Aminopolyols, welches in einem Giessharz (Harzkomponente) enthalten ist, bzw. welches das Giessharz vollumfänglich darstellt, beim Zusammengeben mit einem Polyisocyanat-Härter eine Zwei-Komponenten Vergussmasse erhalten wird, die vergleichsweise schnell, d.h. innerhalb von 5 bis 15 Minuten, aushärtet, während herkömmliche PUR-Giessharze etwa 30-60 Minuten benötigen, und dabei aber nur Reaktionstemperaturen von 80-100°C entstehen. Demgegenüber werden bei Epoxidharzen Temperaturen von bis zu 200°C erreicht, wodurch die höchstzulässige Temperaturbeanspruchung der Isolationsmaterialien von Kabeln von etwa 100°C deutlich überschritten wird.

Durch die deutlich tiefere Exothermie der erfindungsgemäss gefundenen Zwei-Komponenten Systeme wird nunmehr der Verguss von grösseren Volumina ermöglicht, weil die Neigung der Vergussmasse zur Spannungsrissbildung deutlich vermindert ist.

Als weiterer Vorteil der erfindungsgemässen Vergussmasse zeigt sich die zäh-elastische Konsistenz gegenüber dem sprödharten Epoxidharz gemäss dem Stand der Technik. Ausserdem ermöglicht die erfindungsgemässe Vergussmasse aufgrund des schnellen Anstiegs der Viskosität den Einsatz von weniger komplizierten Dichtungsprinzipien (z.B. Stirndichtungen an Muffen).

Dementsprechend umfasst die vorliegende Erfindung eine Zwei-Komponenten Vergussmasse, insbesondere für elektrische Kabel, aus einem Giessharz (Komponente 1) und einem Härter (Komponente 2), welche erst kurz vor Anwendung gemischt werden, wobei das Giessharz ein Aminopolyol als reaktives Polyol enthält oder daraus besteht und der Härter ein Polyisocyanat enthält oder daraus besteht. In einer bevorzugten Ausführungsform weist mindestens eine, bevorzugt die Komponente 1, zusätzlich noch ein Wasserabsorptionsmittel auf.

Die im Aminopolyol enthaltenden Aminogruppen bewirken zum einen eine gewisse Basizität, welche sich katalysierend auf die Vernetzungsgeschwindigkeit des reaktiven Polyols mit dem Polyisocyanat und damit auf die Aushärtungsgeschwindigkeit der Vergussmase auswirkt. Zum anderen können sich die reaktiven Aminogruppen im Aminopolyol, ähnlich wie auch die Hydroxygruppen im Aminopolyol, an der Vernetzung selbst aktiv beteiligen. Dadurch wird wiederum die für die Ausbildung der Vergussmasse erwünschte rasche Aushärtung durch Vernetzung der Komponenten beschleunigt, wobei aber völlig überraschend und unerwartet die Exothermie, vermutlich durch die moderierende Wirkung der im Polyol selbst vorhandenen Aminogruppen, vergleichsweise schwach ausfällt.

In einer bevorzugten Ausführungsform enthält das Giessharz etwa 4-20 Gew.-% eines Aminopolyols, insbesondere eines Alkylaminopolyols. Das Aminopolyol weist dabei vorzugsweise eine Hydroxylzahl von etwa 200 bis 800, bevorzugt von 300 bis 600 auf. Als Alkylgruppen können 1 oder 2, bevorzugt C₁-C₂₄, noch bevorzugter C₁-C₁₂-Alkylgruppen an der Aminogruppe gebunden sein.

Die Giessharzkomponente kann einerseits vollständig aus dem reaktiven Polyol, d.h. dem Aminopolyol bestehen, oder aber als Gemisch eines Aminopolyols mit weiteren weniger reaktiven Komponenten sowie Füllstoffen vorliegen.

Als weitere weniger reaktive Komponenten kann die Giessharzkomponente noch einen oder mehrere Polyetherpolyole ohne Aminogruppen enthalten. Derartige Polyetherpolyole ohne Aminogruppen dienen insbesondere dazu ein möglicherweise allzu heftiges Abreagieren der Aminopolyol- und der Polyisocyanat-Komponente und damit ein zu schnelles Aushärten zu verhindern. Dabei wird vorzugsweise eine Giessharzkomponente enthaltend 2 verschiedene Polyetherpolyole bereitgestellt, wobei das eine Polyetherpolyol eine mittlere Molmasse von 400-500 und eine Hydroxylzahl von 340-420 aufweist, während das zweite Polyetherpolyol eine mittlere Molmasse von 2000-6000 und eine Hydroxylzahl von 30-70 aufweist. Durch ein Polyetherpolyol mit einer mittleren Molmasse von 400-500 und einer Hydroxylzahl von 340-420 wird die letztendlich resultierende Vergussmasse durch die engere Vernetzung härter, während hingegen durch die Beimengung von Polyetherpolyol mit einer mittleren Molmasse von 2000-6000 und eine Hydroxylzahl von 30-70 die letztendlich resultierende Vergussmasse infolge der langen Moleküle weicher gestaltet wird. Je nach den Anforderungen an die Vergussmasse (Härte, gewünschte Aushärtungsgeschwindigkeit) muss das Giessharz entsprechend in bezug auf den Anteil des reaktiven Polyols sowie der weniger reaktiven Polyetherpolyole mengenmässig eingestellt werden.

Da die Anwesenheit von Wasser in der Giessharzkomponente oder in der Polyisocyanat-Härterkomponente zur Reaktion mit dem Polyisocyanat unter Freisetzung von Kohlendioxid führt, sollten die beiden Komponenten, welche zur Herstellung der erfindungsgemässen Vergussmasse unmittelbar vor Gebrauch zusammengegeben werden, in einer bevorzugten Ausführungsform im wesentlichen frei von Wasser sein. Allfällig freigesetztes Kohlendioxid würde zu einer häufig unerwünschten Schäumung führen, was die Eigenschaften der resultierenden Vergussmasse verändern bzw. sogar beeinträchtigen könnte. Daher ist vorzugsweise in mindestens einer der beiden Komponenten, vorzugsweise in der Harzkomponente, ein Wasserabsorbtionsmittel zugegen. Um beispielsweise die Giessharzkomponente hydrophob zu gestalten, können bevorzugt Polyesterpolyole sowie allfällig zusätzlich hydrophobe Stoffe oder alternativ als Wasserabsorbtionsmittel ein Zeolith zugegeben werden. Bevorzugte Polyesterpolyole weisen eine mittlere Molmasse von 400-6000 und eine Hydroxylzahl von 50-140 auf.

Als weitere Zusatzstoffe kann die Giessharzkomponente zusätzlich noch basische Katalysatoren für eine schnellere Vernetzung (z.B. Alkanolamine) sowie mineralische Füllstoffe wie z.B. Quarzmehle, Dolomit, Kreide enthalten.

Analog zur Giessharzkomponente kann die Härterkomponente einerseits vollständig aus dem reaktiven Polyisocyanat bestehen, oder aber ein Präpolymer eines Polyisocyanat sowie Füllstoffe sein bzw. umfassen.

Grundsätzlich kann die Härterkomponente jegliches Polyisocyanat enthalten, in einer bevorzugten Ausführungsform sind es aber diejenigen des TDI- (2,4- bzw. 2,6-Toluylendiisocyanat und deren Mischung) und ganz besonders bevorzugt des MDI-Typs (Methandiphenyldiisocyanat im Gemisch mit seinen höher-kernigen Homologen und Isomeren). Das MDI hat den Vorteil einen niedrigeren Dampfdruck (Smp. 38°C) als das TDI (Smp. 22°C) aufzuweisen, was im Hinblick auf deren Handbarkeit angesichts der beannten Toxizität von Isocyanaten von grosser Relevanz ist. Dies ist auch im Hinblick auf sich abzeichnende gesetzliche Änderungen bezüglich dem Umgang von allzu flüchtigen, toxischen Reaktanten zu sehen, so dass die Verwendung des niederflüchtigen MDI bevorzugt ist.

In einer ganz besonders bevorzugten Ausführungsform enthält die Giessharzkomponente
20-50 Gew.-Teile eines Polyetherpolyols mit einer mittleren Molmasse von 400-500 und einer Hydroxylzahl von 340-420,
30-70 Gew.-Teile eines Polyetherpolyols mit einer mittleren Molmasse von 2000-6000 und einer Hydroxylzahl von 30-70,
5-20 Gew.-Teile eines Polyesterpolyols mit einer mittleren Molmasse von 400-6000 und einer Hydroxylzahl von 50-140,
5-20 Gew.-Teile eines Alkylaminopolyols mit einer Hydroxylzahl von etwa 300 bis 600,
0,01-2 Gew.-Teile eines basischen Katalysators,
3-10 Gew.-Teile eines Zeoliths,
0.01-150 Gew.-Teile eines mineralischen Füllstoffs,
während die Härterkomponente aus etwa 90-100 Gew.-%, bezogen auf das Gesamtgewicht der Härterkomponente, eines Diphenylmethandiisocyanat, Isomeren und Homologen besteht.

In einer bevorzugten Ausführungsform liegt die Kennzahl (d.h. der Isocyanat-Index) zwischen etwa 90 und 115, noch bevorzugter zwischen etwa 105 und 110.

Ein weiterer Gegenstand der vorliegenden Erfindung ist die Verwendung von Aminopolyolen für die Herstellung von Vergussmassen. Die reaktiven Aminopolyole sind dabei Teil der Harzkomponente und reagieren unter Vernetzung mit der Polyisocyanat-Aushärterkomponente. Besonders bevorzugt sind Alkylaminopolyole, wobei die Alkylgruppen 1 oder 2, bevorzugt C₁-C₂₄, noch bevorzugter C₁-C₁₂-Alkylgruppen sein können. Das Aminopolyol weist dabei vorzugsweise eine Hydroxylzahl von etwa 200 bis 800, bevorzugt von 300 bis 600 auf.

Ein weiterer Gegenstand der vorliegenden Erfindung ist die Verwendung der oben beschriebenen erfindungsgemässen Vergussmasse zur Herstellung von wasser- und dampfdichten, elektrisch durchschlagfesten Schichten in Hohlräumen.

Ein letzter Aspekt der vorliegenden Erfindung ist ein Verfahren zur Bereitstellung einer erfindungsgemässen Vergussmasse für elektrische Kabel wobei
a) die Harzkomponente in einem geschlossenen Portionsbeutel oder anderen Gebindeformen wie Dosen, Kessel etc. vorgelegt wird,
b) die Härterkomponente in einem zweiten Portionsbeutel oder anderen Gebindeformen wie Dosen, Kessel etc. vorgelegt wird,
c) beide Komponenten vor Gebrauch vermengt und in den zu füllenden Hohlraum zur Ausfüllung und Aushärtung gegeben werden, und
d) die Hohlraumverkleidung, welche die Form bildet, entfernt wird.

Ein besonderer Vorteil bei der Verwendung der erfindungsgemässen Vergussmassen für Kabelschutzzwecke liegt darin, dass beliebige Formschalen (Hohlraumverkleidung) gewissermassen als Werkzeuge verwendet werden können, wobei die Aushärtung der Vergussmasse gemäss Schritt c) vergleichsweise rasch (5-10 Minuten) stattfindet und die besagte Schale unmittelbar danach entfernt und wiederverwendet werden kann. Damit kann das Verfahren für die Bereitstellung einer Vergussmasse äusserst rationell und auch ökonomisch gestaltet werden, da die Formschalen für die Vergussmasse praktisch unbegrenzt wiederverwendet werden können.

Die erfindungsgemäss erzielten Vorteile gehen insbesondere aus der Figur 1 hervor, wo deutlich wird, dass die Zwei-Komponenten Vergussmasse EG 5 (gestrichelte Kurve) vergleichsweise schnell zu reagieren beginnt, was am Anstieg der Aushärtungstemperatur erkennbar ist und bereits nach weniger als 15 Minuten eine Sättigung erreicht wird. Demgegenüber härtet ein herkömmliches Epoxidharz (gepunktete Kurve) erst ungefähr nach etwa 10 Minuten aus, dann aber fast explosionsartig unter hoher Temperaturentwicklung von bis zu 165°C (nach 16 Minuten). Derartig hohe Aushärtungstemperaturen werden durch die erfindungsgemässen Systeme vermieden, was für die Verwendung beispielsweise als Kabelschutzmaterial äusserst wichtig ist.

Demgegenüber zeigt eine herkömmliche Zwei-Komponenten Polyurethan-Vergussmasse (PUR) unter gleichen Bedingungen (siehe Figur 1; durchgezogene Kurve) zwar moderate Aushärtungstemperaturen (maximal 88°C), aber die Aushärtung findet so schleppend statt, dass sich ein Verfahren zur Bereitstellung einer Vergussmasse für einen Kabelschutz für den Anwender völlig unbefriedigend und ineffizient gestaltet.

Die Aushärtung wird in der Fachwelt dann als ausreichend angesehen, wenn eine Formstabilität von Shore D von ungefähr 10 erreicht worden ist. Diese wird mit den Polyurethansystemen gemäss des Stands der Technik erst etwa nach 30 Minuten erreicht, wobei auch noch die Haftung zwischen der Formschale und der Vergussmasse hoch ausfällt, so dass die Formschalen bisher als Verkleidungsbestandteil um die Vergussmasse herum bestehen bleibt, d.h. sie werden gar nicht mehr entfernt. Demgegenüber haben die erfindungsgemässen Vergussmassen den Vorteil, dass sie keinerlei haftende Verbindung mit der Schale eingehen, schnell und ohne ,hohe Wärmeentwicklung aushärten, so dass diese als Werkzeug verwendet werden können.

Im folgenden soll die vorliegende Erfindung anhand von drei Beispielen näher erläutert werden, wobei dieses nicht als den Schutzbereich einschränkend auszulegen ist.

### Beispiel 1

Zur Herstellung der erfindungsgemässen zwei-Komponenten Vergussmasse für elektrische Kabel wird die Harzkomponente (Giessharz) mit den folgenden Anteilen zusammengestellt :
32 Gew.-Teile eines Polyetherpolyols mit einer OH-Zahl von etwa 350-396;
48 Gew.-Teile eines Polyetherpolyols des Typs mit einer OH-Zahl von etwa 56;
8 Gew.-Teile eines Polyesterpolyols des Typs Ricinusöl;
12 Gew.-Teile eines Alkylaminopolyols des Typs RC-PUR KE 9078 (Rheinchemie AG);
10 Gew.-Teile einer Molekularsieb-Paste vom Typ Alkalialuminosilikat 50% in Ricinusöl;
0,6 Gew.-Teile eines basischen Katalysators auf Basis eines tertiären Amins;
25 Gew.-Teile Quarzmehl als mineralischer Füllstoff.

Die Härterkomponente besteht aus 59 Gew.-Teilen eines Gemisches von MDI mit Isomeren und höherfunktionellen Homologen mit einem NCO-Gehalt von etwa 30.5-32.5 Gew.-%.

Die beiden Komponenten werden unmittelbar vor deren Einsatz, jeweils in einem verschiedenen, geschlossenen Portionsbeutel vorgelegt und kurz vor Gebrauch vermengt und anschliessend in den zu füllenden Hohlraum des Kabelelements, in welchem die Vergussmasse aushärten soll, zur Ausfüllung und Aushärtung gegeben. Nach etwa 10 Minuten ist die Aushärtung so weit vorangeschritten, d.h. eine Shore D-Härte von etwa 10 erreicht, dass die Hohlraumverkleidung entfernt werden kann, wobei die resultierende Vergussmasse aber einwandfrei formstabil bleibt. Die beim Aushärten maximal entstehende Temperatur beträgt etwa 80°C, so dass keinerlei Schädigungen am Kabelelement entstanden sind.

### Beispiel 2

Zur Herstellung der erfindungsgemässen zwei-Komponenten Vergussmasse für elektrische Kabel wird die Harzkomponente (Giessharz) mit den folgenden Anteilen zusammengestellt :
50 Gew.-Teile eines Polyetherpolyols mit einer OH-Zahl von etwa 360-400;
30 Gew.-Teile eines Polyetherpolyols des Typs mit einer OH-Zahl von etwa 32-37;
10 Gew.-Teile eines Polyesterpolyols mit einer OH-ahl von etwa 165-175;
10 Gew.-Teile eines Alkylaminopolyols des Typs RC-PUR KE 9078 (Rheinchemie AG);
15 Gew.-Teile einer Molekularsieb-Paste vom Typ Alkalialuminosilikat 50% in Ricinusöl;
0,8 Gew.-Teile eines basischen Katalysators auf Basis eines tertiären Amins;
125 Gew.-Teile Microdol als mineralischer Füllstoff.

Die Härterkomponente besteht aus 70 Gew.-Teilen eines Gemisches von MDI mit Isomeren und höherfunktionellen Homologen mit einem NCO-Gehalt von etwa 30.5-32.5 Gew.-%.

Die beiden Komponenten werden gemäss Beispiel 1 zur Herstellung der Vergussmasse eingesetzt.

### Beispiel 3

Zur Herstellung der erfindungsgemässen zwei-Komponenten Vergussmasse für elektrische Kabel wird die Harzkomponente (Giessharz) mit den folgenden Anteilen zusammengestellt :
25 Gew.-Teile eines Polyetherpolyols mit einer OH-Zahl von etwa 380-420;
40 Gew.-Teile eines Polyetherpolyols des Typs mit einer OH-Zahl von etwa 45-50;
15 Gew.-Teile eines Polyesterpolyols mit einer OH-Zahl von etwa 200-230;
20 Gew.-Teile eines Alkylaminopolyols des Typs RC-PUR KE 9078 (Rheinchemie AG);
12 Gew.-Teile einer Molekularsieb-Paste vom Typ Alkalialuminosilikat 50% in Ricinusöl;
1 Gew.-Teile eines basischen Katalysators auf Basis eines tertiären Amins;
75 Gew.-Teile Kreide als mineralischer Füllstoff.

Die Härterkomponente besteht aus 64 Gew.-Teilen eines Gemisches von MDI mit Isomeren und höherfunktionellen Homologen mit einem NCO-Gehalt von etwa 30.5-32.5 Gew.-%.

Die beiden Komponenten werden gemäss Beispiel 1 zur Herstellung der Vergussmasse eingesetzt.

## Patentansprüche

1. Zwei-Komponenten Vergussmasse aus einer Harzkomponente und einer Härterkomponente, welche erst kurz vor der Anwendung gemischt werden, dadurch gekennzeichnet, dass die Harzkomponente ein Aminopolyol enthält oder daraus besteht und der Härter ein Polyisocyanat enthält oder daraus besteht.

2. Vergussmasse nach Anspruch 1, dadurch gekennzeichnet, dass die Harzkomponente etwa 4-20 Gew.-% eines Aminopolyols, insbesondere eines Alkylaminopolyols enthält.

3. Vergussmasse nach einem der Ansprüche 1 oder 2, dadurch gekennzeichnet, dass das Aminopolyol eine Hydroxylzahl von etwa 200 bis 800, bevorzugt von 300 bis 600 aufweist.

4. Vergussmasse nach einem der vorhergehenden Ansprüche, dadurch gekennzeichnet, dass die Harzkomponente ausserdem noch ein Polyetherpolyol mit einer mittleren Molmasse von 400-500 und einer Hydroxylzahl von 340-420 enthält.

5. Vergussmasse nach einem der vorhergehenden Ansprüche, dadurch gekennzeichnet, dass die Harzkomponente ausserdem noch ein Polyetherpolyol mit einer mittleren Molmasse von 2000-6000 und einer Hydroxylzahl von 30-70 enthält.

6. Vergussmasse nach einem der vorhergehenden Ansprüche, dadurch gekennzeichnet, dass die Harzkomponente ausserdem noch ein Polyesterpolyol mit einer mittleren Molmasse von 400-6000 und einer Hydroxylzahl von 50-140 enthält.

7. Vergussmasse nach einem der vorhergehenden Ansprüche, dadurch gekennzeichnet, dass die Harzkomponente ausserdem noch Zusatzstoffe ausgewählt aus der Gruppe umfassend basische Katalysatoren, mineralische Füllstoffe und Zeolithe enthält.

8. Vergussmasse nach einem der vorhergehenden Ansprüche, dadurch gekennzeichnet, dass die Härterkomponente ein Polyisocyanat des Typs MDI ist.

9. Vergussmasse nach einem der vorhergehenden Ansprüche, dadurch gekennzeichnet, dass die Harzkomponente
20-50 Gew.-Teile eines Polyetherpolyols mit einer mittleren Molmasse von 400-500 und einer Hydroxylzahl von 340-420,
30-70 Gew.-Teile eines Polyetherpolyols mit einer mittleren Molmasse von 2000-6000 und einer Hydroxylzahl von 30-70,
5-20 Gew.-Teile eines Polyesterpolyols mit einer mittleren Molmasse von 400-6000 und einer Hydroxylzahl von 50-140,
5-20 Gew.-Teile eines Alkylaminopolyols mit einer Hydroxylzahl von etwa 300 bis 600,
0,01-2 Gew.-Teile eines basischen Katalysators,
3-10 Gew.-Teile eines Zeoliths,
0,01-150 Gew.-Teile eines mineralischen Füllstoffs, und die Härterkomponente
90-100 Gew.-%, bezogen auf das Gesamtgewicht der Härterkomponente, eines Polyisocyanats auf der Grundlage eines MDI
enthält oder daraus besteht.

10. Vergussmasse nach einem der vorhergehenden Ansprüche, dadurch gekennzeichnet, dass die Isocyanat-Kennzahl zwischen etwa 90 und 115, bevorzugt zwischen etwa 105 und 110 liegt.

11. Vergussmasse nach einem der vorhergehenden Ansprüche, dadurch gekennzeichnet, dass zusätzlich noch ein Wasserabsorptionsmittel in mindestens einer der beiden Komponenten, vorzugsweise in der Harzkomponente, zugegen ist

12. Verwendung einer 2-Komponenten Vergussmasse nach einem der vorhergehenden Ansprüche, zur Herstellung von wasser- und dampfdichten, elektrisch durchschlagfesten Schichten in Hohlräumen.

13. Verwendung gemäss Anspruch 12, dadurch gekennzeichnet, dass die 2-Komponenten Vergussmasse für die Abdichtung eines elektrischen Kabels eingesetzt wird.

14. Verwendung von Aminopolyolen für die Herstellung von Vergussmassen nach einem der Ansprüche 1 bis 11.

15. Verfahren zur Bereitstellung einer Vergussmasse nach einem der Ansprüche 1 bis 11, dadurch gekennzeichnet, dass
a) die Harzkomponente in einem geschlossenen Portionsbeutel oder anderen Gebindeformen wie Dosen, Kessel etc. vorgelegt wird,
b) die Härterkomponente in einem zweiten Portionsbeutel oder anderen Gebindeformen wie Dosen, Kessel etc. vorgelegt wird,
c) beide Komponenten vor Gebrauch vermengt und in den zu füllenden Hohlraum zur Ausfüllung und Aushärtung gegeben werden, und
d) die Hohlraumverkleidung, welche die Form bildet, entfernt wird.
